# DEMANDE DE BREVET EUROPEEN

(11) **EP 2 554 783 A1**
(43) Date de publication de la demande: **06.02.2013**
(21) Numéro de dépôt: 11290352.1
(22) Date de dépôt: 01.08.2011
(51) Int. Cl.: E21B 17/02, F16L 15/00

(54) **Manchon pour connexion d'éléments tubulaires pour des installations de fond de puits**

(71) Demandeur: Vallourec Mannesmann Oil&Gas France, 59620 Aulnoye-Aymeries (FR)
(72) Inventeur: La désignation de l'inventeur n'a pas encore été déposée
(74) Mandataire: Marsolais, Richard

(57) **Abrégé**

Le manchon comprend un corps tubulaire avec deux extrémités du corps munies chacune d'une portion (14) de filetage interne pour l'accouplement à un élément tubulaire, le corps tubulaire comprenant encore une portion centrale séparant les deux extrémités munies chacune d'une portion de filetage (14) et comportant une épaisseur de paroi plus grande que l'épaisseur de la paroi des extrémités du corps. Plus précisément, ce manchon comprend un segment d'extension (18) qui s'étend à partir d'une des extrémités du corps tubulaire, après la portion de filetage interne (14), le segment d'extension possédant le même diamètre externe que celui du corps tubulaire et un diamètre interne égal ou plus grand à celui de la portion de filetage interne. En outre, le segment d'extension (18) comprend un logement (12), muni d'une ouverture débouchant sur une surface externe du manchon, à l'intérieur duquel est logée une étiquette d'identification électroniquement sensible.

## Description

La présente invention concerne un manchon pour des tubes à parois minces utilisés dans des activités de construction, service et entretien de puits d'exploration pétrolières, terrestres ou maritimes, ainsi que la production pétrolière et gazière à partir de ces puits.

### Description de l'état de la technique

Les opérations réalisées dans un puits pétrolier avant le début de l'exploitation de pétrole et de gaz nécessitent un nombre important de pièces d'équipements et de matériaux. Jusqu'à arrivée à destination, ainsi que pendant leur stockage, installation, démontage et entretien ultérieur, ces pièces, telles que tubes, revêtements, obturateurs, manchons de connexion, clapets et autres, doivent être manipulées un grand nombre de fois. Cependant, il est très important d'avoir toujours la quantité adéquate d'équipements disponibles afin d'éviter des interruptions, qui causent d'énormes dépenses liées aux coûts opérationnels élevés des puits de pétrole.

En service, ces pièces, et spécialement les manchons de connexion, sont soumises à des contraintes considérables qui peuvent conduire à de sérieux dommages et failles de l'équipement, par distorsion, usure ou fatigue. Une faille de fatigue sur le manchon de connexion, par exemple, peut conduire à une paralysie complète des opérations du puits. Il faut noter qu'un tel incident et le travail en résultant de réparation de l'équipement génèrent d'énormes dépenses, inhérentes à tout temps d'immobilisation du puits de pétrole.

Ces pièces présentent un coût élevé, liées à la quantité importante de matériel utilisé dans leur fabrication, à leurs procédés de fabrication complexes, et aux exigences de normes de haute qualité auxquelles elles doivent répondre pour qu'elles puissent supporter les contraintes de service et éviter des pertes liées aux défaillances durant leur service. Par conséquent, ces coûts élevés de pièces justifient leur entretien et leur réparation pour permettre une réutilisation ultérieure. En particulier, l'acier utilisé pour la fabrication de manchons et de tubes peut être en général réutilisé. Les tubes et les manchons sont plusieurs fois réparés et réutilisés directement après le démontage de la colonne ou sont retournés à leurs fabricants, pour qu'ils puissent les recycler, réduisant des dépenses inutiles de matière première.

De cette façon là, il est souhaitable d'avoir un enregistrement permanent des tubes et manchons qui sont installés à l'intérieur d'une colonne, contenant, par exemple, l'identification du fabricant, du matériel, et d'autres caractéristiques des composants, lesquelles peuvent être de nouveau connues après le démontage de la colonne. L'enregistrement peut être encore utilisé en outre pour stocker des informations relatives à la durée d'utilisation afin de permettre un contrôle de la fatigue et d'autres facteurs liés à l'utilisation de l'équipement.

L'identification des caractéristiques et des propriétés de tubes et de manchons est importante également pendant le stockage et le transport de l'équipement, afin de permettre une localisation rapide et une identification certaine de chaque type d'article.

De nos jours, il est classique dans les procédures industrielles d'identifier les tubes et autres équipements OCTG en peignant l'information la plus importante sur le corps du tube, plusieurs fois en fonction des normes spécifiques du produit. Cependant, ce type de marquage est facilement endommagé et s'use pendant le transport, la manipulation, le stockage et l'utilisation prolongée du tube. Ceci est dû notamment au contact physique abrasif, à la chaleur et à la corrosion. Étant donné qu'elle ne présente aucun type de protection, le marquage avec de l'encre peut aussi être gratté par n'importe quel tiers non autorisé.

Les étiquettes d'identification (désignées couramment par la terminologie anglo-saxonne "tags") électroniquement sensibles (accessibles par des ondes électromagnétiques, par exemple) peuvent être utilisées pour stocker des caractéristiques du composant de façon numérique et pendant une longue durée. Cependant, l'application d'une étiquette de ce type à des tubes et manchons de telle manière à ce qu'elle puisse résister aux conditions sévères auxquelles les tubes sont soumis pendant plusieurs années, de haute pression et de température, d'environnement corrosif, d'abrasion et d'impact, est relativement complexe à réaliser.

Certains types de tube, tels que les tubes de cuvelage et de production, présentent des épaisseurs de paroi très minces, typiquement comprises environ entre 4 et 25mm, et le plus souvent entre 4 et 20 mm, et sont conçus pour être installés au final à l'intérieur d'une autre colonne. Ainsi, tout matériel supplémentaire ou composant appliqué sur la surface externe de ces tubes augmentent le diamètre externe, ce qui peut conduire à des difficultés ou même rendre impossible l'installation des tubes à l'intérieur de la colonne prévue à cet effet.

Par ailleurs, il n'est pas possible de réduire l'épaisseur déjà mince de ce type de tubes en attachant un élément identifiant à l'intérieur d'une fente sur sa surface externe ou interne, car cela aurait un impact sur la résistance structurelle du tube et ainsi augmenterait le risque de failles et dommages.

L'application d'étiquettes RFID (acronyme anglo-saxon pour Radio Frequency IDentification) à des tubes et composants utilisés dans des colonnes de forage est déjà connu dans l'état de la technique. Le document US2002/0014966, par exemple, fait référence à une étiquette d'identification qui peut être fixée à un ou plusieurs composants d'un système de forage de puits de pétrole. Une des possibilités est celle d'intégrer l'étiquette à un connecteur reliant deux tubes de forage. L'étiquette est disposée dans un trou de profondeur comprise entre environ 15 à 20 mm à l'intérieur du composant de la colonne de forage, avec un logement de protection et un couvercle qui protège l'étiquette des débris et autres dommages potentiels causés par l'environnement de forage de puits.

Les connecteurs montrés dans ce document comprennent une région centrale avec une plus grande épaisseur à proximité du filetage mâle qui est connecté au filetage femelle du tube de forage consécutif. Les tubes de forage et plus particulièrement les connecteurs utilisés pour le forage ont des épaisseurs relativement plus grandes, avec des épaisseurs atteignant des valeurs de 50 mm et plus, de telle sorte que l'application d'une étiquette à l'intérieur d'un évidement en n'importe quel lieu de la surface externe ne diminue pas l'intégrité mécanique de ces composants de manière significative. En outre, le procédé de fabrication de ces évidements est relativement simple, parce que les épaisseurs de paroi larges ne requièrent pas une opération de forage ou d'usinage vraiment précise.

Le document US 7.159.654 fait aussi référence à l'identification d'équipement de l'industrie pétrolière et gazière par l'application d'étiquettes RFID sur la surface externe des composants. Différents moyens d'application des étiquettes sur le tube, par exemple, sont présentés, incluant l'insertion dans des évidements ménagés sur l'épaulement à proximité des filetages mâle en extrémité du tube ou encore dans la portion centrale du connecteur avec des épaisseurs de paroi plus grandes ou encore filetés ou collés sur la surface externe des tubes de forage. Les solutions montrées ne prennent en compte ni la conservation du diamètre externe ni leur adaptation à des composants à paroi mince, tels que les tubes de cuvelage par exemple, parce qu'elles n'ont pas de conséquences sur l'intégrité mécanique des tubes.

Le document US2002/0035448 décrit un système pour l'identification d'un équipement OCTG basé sur une étiquette RFID à l'intérieur d'un logement de protection. Ce logement peut être inséré à l'intérieur d'un évidement ménagé sur la surface externe. De la même façon que précédemment, cette solution ne peut pas être appliquée sur des composants à paroi mince, puisque de tels évidements dégradent la résistance mécanique.

Il est aussi important que les pièces utilisées dans l'exploration de puits de gaz et de pétrole remplissent certaines exigences de stérilité afin de réduire le risque de contamination du puits et d'obstructions des canaux et valves à l'intérieur de la colonne. C'est la raison pour laquelle l'application de tout matériau sur la surface interne ou externe devrait être évitée, à moins qu'il n'y ait aucun risque que le matériau supplémentaire puisse être rasé ou exfolié.

Le document WO200510073, par exemple, propose d'appliquer une étiquette RFID sur la surface externe d'une structure tubulaire, et de protéger l'étiquette par dépôt d'une série de couches de matériau résistant à la chaleur sur l'étiquette. Outre le fait que ce type de protection à chaleur permet seulement de retarder l'effet de températures élevées mais se révèle inefficace pour protéger les parties sensibles électroniques sur une période prolongée, le matériau pose un risque de contamination du puits et est par conséquent non adapté pour l'identification de tubes d'acheminement du gaz et du pétrole.

On remarque donc, qu'aucune des techniques déjà connues permet un marquage efficace, durable et qui ne provoque pas de dommages structurels à des tubes à parois minces ou qui ne présente pas de risque de contamination du puits.

### Buts de l'invention

Un premier but de l'invention est de fournir une structure tubulaire avec une étiquette d'identification électroniquement sensible qui puisse endurer plusieurs années de service dans des conditions d'utilisation usuelles dans les puits pétroliers, qui soit résistant à la manipulation, au transport, au stockage et au montage de colonnes, et qui ne compromette pas l'intégrité mécanique des tubes à parois minces ou ne présente pas de risque de contamination du puits.

C'est encore un but de l'invention de fournir une structure tubulaire équipée d'une étiquette d'identification électroniquement sensible qui soit facile à appliquer, sans nuire à la productivité du processus de production ou à son applicabilité.

Un autre but de l'invention est que l'étiquette d'identification électroniquement sensible dans la structure tubulaire permette une lecture facile de toute l'information contenue en utilisant des dispositifs prêts à l'usage, même sous des conditions défavorables et avec une haute tolérance aux erreurs. En outre, l'étiquette devrait être protégée contre toute violation ou manipulation par des tierces parties non autorisées.

### Description résumée des dessins

D'autres caractéristiques et avantages de l'invention apparaîtront à la lumière de la description qui suit faite en référence aux dessins annexés dans lesquels :
Figure 1- montre une vue en perspective et en coupe latérale d'un manchon, selon un premier mode de réalisation de l'invention, dans laquelle l'étiquette d'identification électroniquement sensible est disposée dans une région centrale du manchon ;
Figure 2- montre une vue en perspective et en coupe latérale d'un manchon selon un deuxième mode de réalisation de l'invention, dans laquelle l'étiquette d'identification électroniquement sensible est disposée dans une région centrale du manchon qui possède une longueur prolongée ;
Figure 3- montre une vue en perspective et en coupe latérale d'un manchon selon un troisième mode de réalisation de l'invention, dans laquelle l'étiquette d'identification électroniquement sensible est incorporée dans une région tubulaire additionnelle s'étendant d'un côté du manchon par conséquent asymétrique ;
Figure 4- montre une vue en perspective et en coupe latérale d'un manchon selon un quatrième mode de réalisation de l'invention, dans laquelle l'étiquette d'identification électroniquement sensible est incorporée dans une région tubulaire additionnelle séparée connectée à un côté du manchon ;
Figure 5- montre une vue en coupe détaillée de l'étiquette d'identification électroniquement sensible agencée à l'intérieur d'une enveloppe séparée qui est installée sur le manchon par un ajustement serré ; et
Figure 6- montre une vue en coupe transversale d'un manchon selon un cinquième mode de réalisation de l'invention, dans laquelle l'étiquette d'identification électroniquement sensible est disposée sur un segment d'extension formé par une pièce séparée raccordée à une extrémité du corps tubulaire, le logement de l'étiquette étant orienté dans la direction longitudinale du manchon.

### Description détaillée des figures

Le manchon de la présente invention est utilisé pour la connexion de tubes à parois minces tels que des tubes pour la production de pétrole et de gaz ou comme tubes de cuvelage pour le renforcement de puits forés. Ces tubes possèdent un diamètre externe d'environ 6 à 40,65cm (2^{3/8} à 16 pouces), et une paroi d'épaisseur environ de 4 à 25 mm, de préférence de 4 à 20mm.

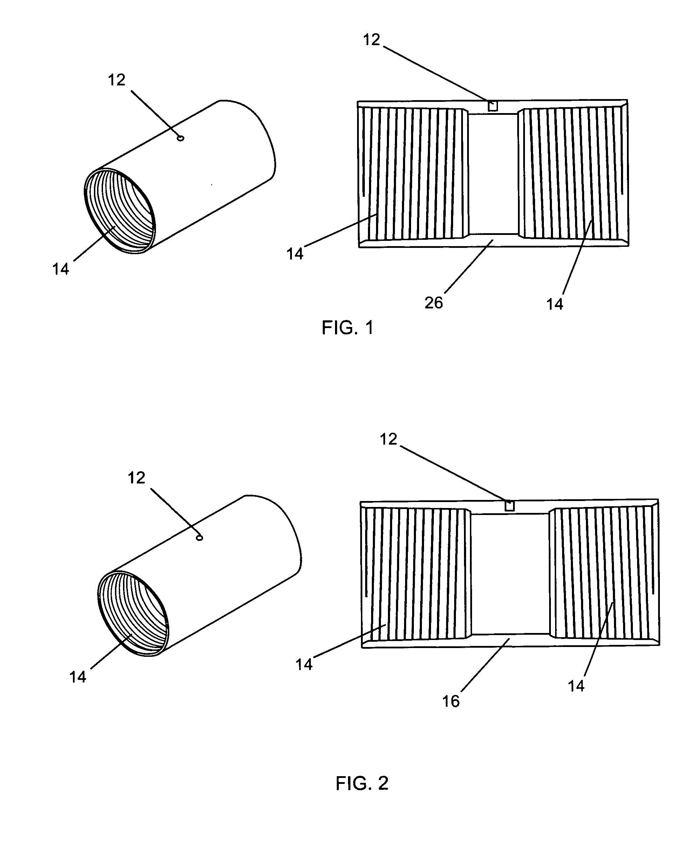

Comme on peut remarquer sur les figures 1 à 4, le manchon identifiable pour connecter des éléments tubulaires à parois minces pour des installations de fond de puits comprend un corps tubulaire 1 préférentiellement avec un diamètre externe constant selon sa longueur. Chacune des deux extrémités du corps tubulaire 1 est munie d'une portion interne filetée 14 du type femelle pour son couplage avec d'autres éléments tubulaires. Les éléments tubulaires (non illustrés) possèdent, donc, des portions externes filetées, du type mâle, compatibles avec celles du manchon, qui permettent un couplage sûr.

Selon la présente invention, le corps tubulaire du manchon possède un logement 12, à l'intérieur duquel est insérée une étiquette d'identification électroniquement sensible (par exemple, une étiquette d'identification par radiofréquence - connue sous l'acronyme anglais « RFID ») qui contient des informations d'identification sur le manchon et/ou sur le tube auquel le manchon est couplé.

L'étiquette d'identification électroniquement sensible permet le marquage permanent du manchon avec ses informations d'identification, lesquelles peuvent être lues dès sa fabrication, pendant son transport, sa manipulation et son installation jusqu'au moment où la colonne est démontée, en permettant une réutilisation de ces pièces, après la reconnaissance et l'éventuelle réparation des mêmes pièces.

Les informations contenues dans l'étiquette d'identification électroniquement sensible sont préférablement le type d'article, le fabricant, la norme, la dimension, le grade de l'acier, le numéro de coulée, le lot de production, le type de filetage, la date de fabrication, la protection, la destination et les recommandations d'utilisation, parmi d'autres.

Le logement doit être localisé à l'intérieur d'une région du corps tubulaire de faibles sollicitations mécaniques, afin de ne pas causer une réduction de la résistance du manchon et compromettre son intégrité mécanique. Les régions de plus faibles sollicitations mécaniques ont été détectées dans la partie centrale du manchon et en un segment d'extension dans les extrémités du manchon. Le logement 12 possède une ouverture débouchant dans une surface externe du corps tubulaire. De préférence, ce logement consiste en un évidement dans le corps tubulaire qui s'ouvre sur la surface externe du manchon, conformément à ce qui a été montré dans les modes de réalisations illustrés par les figures 1 et 2, de façon à permettre une lecture facile des informations contenues dans l'étiquette d'identification électroniquement sensible.

Le logement doit posséder une forme et des dimensions adaptées, afin de loger convenablement l'étiquette d'identification électroniquement sensible et de permettre un fonctionnement approprié de cette étiquette.

Dans les modes illustrés par les figures 1 et 2, le logement 12 de l'étiquette d'identification électroniquement sensible est situé dans une portion centrale 16, 26 du corps tubulaire du manchon, entre les deux portions internes filetées 14 du manchon, qui est la région de plus grande épaisseur, et donc de plus grande résistance mécanique du manchon.

Selon les dimensions de la colonne et du type de connexion, l'épaisseur de la paroi dans la zone centrale du manchon 16, 26 peut avoir des valeurs deux fois plus grandes que celles de l'épaisseur de la paroi du tube respectif couplé à ce manchon là. En outre et en règle générale, le diamètre externe des tubes est toujours plus petit que le diamètre des manchons qui les relient, ce qui conduit à une beaucoup plus petite aire de la section transversale des tubes en comparaison au manchon et plus particulièrement à sa portion centrale. Ainsi, des fissures dues à la surcharge de tension axiale ou à la fatigue se produisent généralement dans la zone des premiers filets des filetages externes des tubes, ce qui permet l'introduction d'un évidement d'une certaine taille dans la partie centrale du manchon, sans affaiblir l'assemblage lui-même. Dans le manchon, les portions filetées 14 sont typiquement celles qui subissent les contraintes les plus élevées en service, de façon à ce qu'un évidement dans la portion centrale plus épaisse 16 ou 26 du manchon n'a aucun effet, ou au moins des effets tolérables sur l'intégrité structurelle du composant.

En outre, cette région de plus grande épaisseur permet que l'évidement possède une profondeur plus grande que dans d'autres régions du manchon, et avec des tolérances de variation de profondeur aussi plus grandes, ce qui simplifie grandement le processus de fabrication du manchon incluant l'évidement. De préférence, le logement possède une profondeur d'un maximum de 5mm pour limiter autant que possible l'impact sur la résistance mécanique du manchon.

Dans le mode de réalisation de l'invention illustrée dans la figure 1, le logement 12 est formé dans la région centrale 26 du manchon, laquelle possède des dimensions normalement utilisées dans les manchons de cette nature. Selon ce mode de réalisation de l'invention, la région centrale 26 du manchon entre les portions filetées des extrémités possède typiquement une longueur de 20 à 55 mm, et peut varier selon la taille exacte ou selon le type de construction.

Dans le mode de réalisation illustré par la figure 2, le manchon 16 a une région centrale du manchon 16 d'extension plus longue, comparée au manchon du mode de réalisation de la figure 1, afin de fournir plus de tolérances autour du logement 12 en forme d'évidement du manchon pour l'insertion de l'étiquette d'identification électroniquement sensible. Dans ce mode, la région centrale étendue 16 peut présenter une longueur comprise entre 55 à 100 mm. Cette plus grande distance entre les portions filetées 14 du manchon formant une région centrale 16 plus longue permet un design résistant à la fatigue, avec des rayons plus doux, en réduisant ainsi les effets de concentration de contraintes. De cette façon là, l'impact de l'évidement sur la résistance mécanique du montage du manchon avec les tubes est réduit et/ou permet un plus grand espace disponible pour insérer une étiquette d'identification électroniquement sensible qui possède une plus grande bande de lecture en raison d'une plus grande taille de l'antenne.

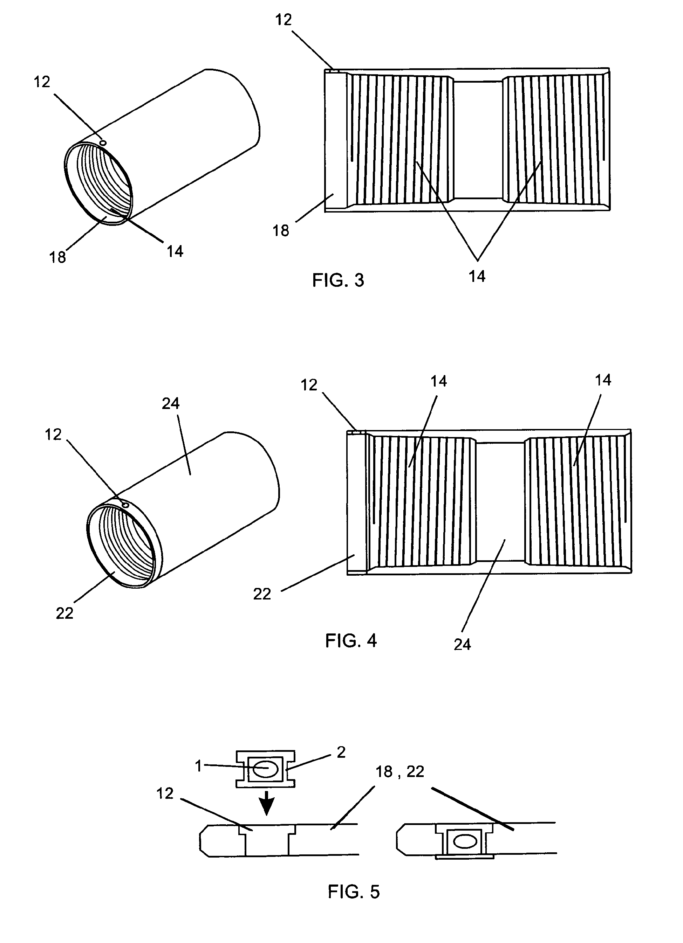

Dans les modes de réalisation illustrés par les figures 3, 4 et 6, le manchon comprend un segment d'extension 18 ou 22 additionnel, qui doit avoir le même diamètre que le manchon lui-même afin de ne pas augmenter le diamètre extérieur du manchon.

Le segment d'extension 18, 22, s'étend à partir d'une extrémité du manchon, après la portion de filetage interne 14, créant un manchon asymétrique avec une plus grande longueur en comparaison au manchon du mode de réalisation illustré par la figure 1.

Le segment d'extension 18, 22 possède un diamètre interne égal ou plus grand que celui de la portion de filetage interne 14, pour éviter toute interférence lors de la connexion des éléments tubulaires au manchon.

De préférence, le segment d'extension 18, 22 ne possède pas de filetage interne afin de fournir une petite distance par rapport au tube connecté à lui ainsi qu'à sa surface externe filetée mâle.

Cette disposition rend plus facile la fabrication de cette portion du manchon, au moyen d'une épaisseur bien définie et totalement utilisable du segment d'extension sans filetage complet ou incomplet à l'intérieur. En outre, cette configuration permet aussi d'éviter des interférences et offre quelque espace du côté interne du manchon qui peut être utile pour fixer l'étiquette d'identification. Finalement, le segment d'extension sert comme une protection pour une zone annulaire du tube connectée au manchon contre des impacts mécaniques, qui peut alors être utilisée pour appliquer un marqueur de surface, par micro-percussion ou laser, par exemple, en faisant référence au tube et au manchon.

Dans les modes de réalisation des figures 3, 4, et 6, le logement 12 de l'étiquette est localisé dans le segment d'extension 18, 22, qui est une région qui est libre de sollicitations mécaniques. Par conséquent, l'introduction du logement 12 dans cette zone ne nuit pas à la performance du manchon.

Dans les modes de réalisation des figures 3 et 4, le logement 12 de l'étiquette est orienté dans la direction radiale du manchon et préférentiellement possède une ouverture dans une surface interne du corps tubulaire en plus de l'ouverture dans la surface externe du corps tubulaire, créant un trou traversant la paroi du segment d'extension 18, 22. Cette disposition est avantageuse car elle simplifie le procédé de fabrication du manchon, puisque la réalisation d'un orifice débouchant dans ce segment d'extension 18, 22 exige une précision beaucoup plus petite que la réalisation d'un évidement avec une profondeur définie précisément, comme c'est le cas des modes de réalisation montrées dans les figures 1 et 2.

Dans le mode de réalisation de l'invention illustrée par la figure 3, le segment d'extension 18 est formé comme une partie intégrante du corps tubulaire, dès la fabrication de cette pièce du corps tubulaire, qui doit être considérée depuis la coupe de la matière première. Dans le mode de réalisation illustré par la figure 4, le segment d'extension 22 est formé par une pièce séparée qui est ensuite fixée à une extrémité du corps tubulaire du manchon, par exemple par soudage, par collage, par filetage, par un ajustement positif, etc.

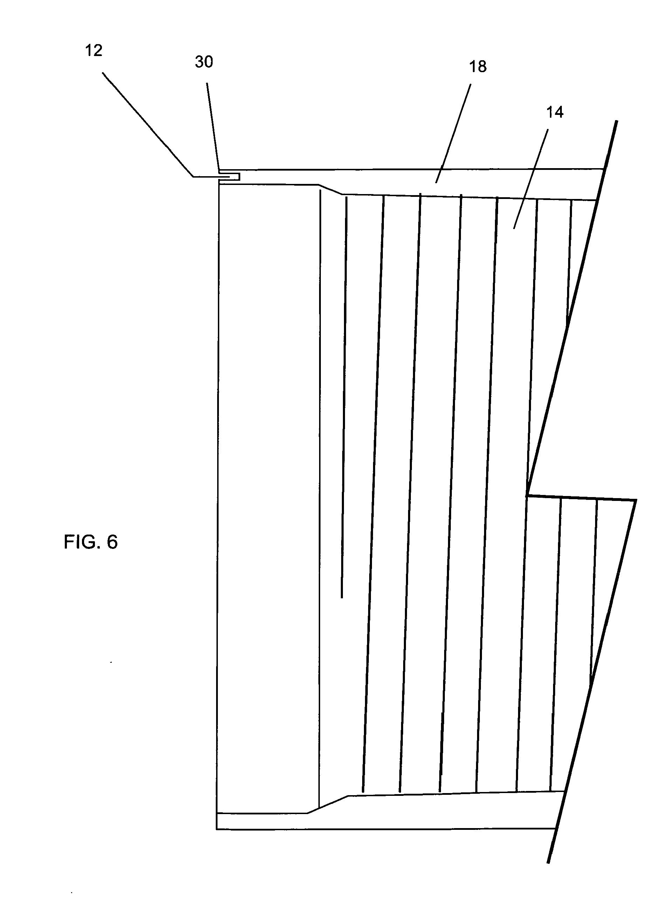

Dans le mode de réalisation illustrée par la figure 6, le logement 12 est configuré comme un évidement orienté dans la direction longitudinale du manchon et est localisé au bord 30 du segment d'extension 18 qui forme une partie intégrante du manchon. Le logement est ouvert à la surface du bord 30 du segment d'extension 18 qui fait aussi partie de la surface externe du manchon. Toujours selon l'invention, un logement orienté longitudinalement peut aussi être appliqué à un segment d'extension 22 (mode non illustré) du type formé comme une pièce séparée du manchon, qui est par la suite annexée à celle-ci. Dans ce cas, le logement doit être localisé dans l'extrémité du segment d'extension 22 opposée au coté de connexion du segment d'extension avec le manchon.

Le manchon selon la présente invention peut encore contenir une enveloppe 2 sous forme d'une pièce séparée pour logement de l'étiquette 1, conformément à ce qui a été montré dans la figure 6. L'enveloppe peut être formée de n'importe quel type de matériau plastique. L'étiquette est disposée à l'intérieur de l'enveloppe 2, laquelle est alors couplée dans le logement 12 sous forme d'un trou traversant, de préférence par un ajustement serré, par filetage (non illustré), par collage, par soudage, par ajustement positif, par clipsage, etc. N'importe lequel de ces moyens de fixation peut être utilisé dans le cas où le logement est formé d'un orifice traversant (figures 3 et 4) ou dans le cas où le logement est un évidement formé dans la paroi du manchon (figures 1 et 2). D'autres moyens de fixation de l'enveloppe peuvent être utilisés sans sortir du cadre de l'invention. L'avantage d'utiliser une enveloppe 2 pour l'étiquette est de permettre un assemblage facile, pouvant éventuellement être fait même manuellement.

Dans tous les modes de réalisation décrits, un emboîtement précis de l'enveloppe 2 dans le logement 12 ou le remplissage de l'espace vide entre le logement et l'étiquette de l'identification électroniquement sensible est très important pour éviter des fissures liées à la corrosion. Ce type de corrosion est définie dans la littérature « ASM Handbook » comme une corrosion de type pile d'aération différentielle (selon la terminologie anglo-saxonne « differential aeration cell ») causée par l'accumulation d'humidité, de particules humides, de boue, de sable ou de fluides stagnant qui peuvent se produire dans des ouvertures étroites ou des espaces entre des composants métal avec métal ou non métal avec métal . Cela est très important, puisque, une fois que les tubes sont insérés dans des colonnes de cuvelage ou de production et par exemple à la différence de tubes de forage, ils restent pendant une longue période de temps dans des conditions défavorables sans la possibilité d'inspection ou de maintenance.

La figure 5 représente une configuration de l'enveloppe 2 du manchon selon l'invention. Comme on peut remarquer dans la figure, l'enveloppe 2 possède un profil cylindrique avec des bords supérieur et inférieur qui s'étendent au-delà de la région centrale cylindrique, et en possédant un diamètre plus grand que celui de la région centrale de l'enveloppe. Cette enveloppe peut être fermée dans ses extrémités supérieure et inférieure, de sorte que l'étiquette d'identification électroniquement sensible reste isolée et protégée dans son intérieur.

Dans ce mode de réalisation de l'invention, le logement 12 de l'étiquette est sous forme d'orifice traversant avec une portion centrale ayant un diamètre intérieur compatible avec un diamètre extérieur de l'enveloppe, afin de permettre un encastrement ajusté à l'intérieur du logement 12. Le bord supérieur du logement 12 possède un diamètre plus grand que celui de sa région centrale, avec des dimensions compatibles avec celles du bord supérieur de l'enveloppe 2, pour permettre aussi l'ajustement serré de l'enveloppe dans le logement. Ainsi, au moment du montage du manchon, l'enveloppe 2 de l'étiquette est appuyée sur le logement 12 et pressée vers l'intérieur du logement, en direction de l'intérieur du corps tubulaire, jusqu'à son complet emboîtement dans le logement 12. Le bord inférieur de plus grand diamètre de l'enveloppe s'emboîte à l'extérieur de l'ouverture du logement tournée vers la surface interne du manchon en assurant l'ajustement serré par pression de l'enveloppe dans le logement.

La présente invention permet l'application de procédés simples pour l'installation d'étiquettes d'identification électroniquement sensible directement ou indirectement par l'utilisation d'une encapsulation plastique sans compromettre la productivité de la ligne de production. En outre, l'application de l'étiquette d'identification électroniquement sensible au manchon au lieu de l'appliquer au tube en soi même évite en outre des modifications du procédé de fabrication des tubes eux-mêmes.

Dans tous les modes de réalisation précédemment décrits, l'étiquette d'identification électroniquement sensible est appliquée à un logement de la paroi du manchon sans avoir d'influence sur le diamètre extérieur du manchon, ce qui est essentiel en considérant la possibilité du manchon d'être déployé à l'intérieur d'une colonne qui est elle-même vissé à l'intérieur d'une autre colonne. Comme les étiquettes sont installées de manière à être accessibles à travers la surface externe du manchon, cette disposition rend possible une lecture facile de l'information, par transmission par des radio-fréquences par exemple, utilisant un équipement de lecture commun disponible facilement dans le marché.

En même temps, comme les étiquettes sont disposées dans des logements du corps tubulaire du manchon, elles sont protégées contres des impacts résultant de la manipulation, du transport, du stockage et du montage des colonnes sans compromettre l'intégrité mécanique des tubes et sans avoir recours à l'utilisation de matériaux supplémentaires ou de couches de protection sur l'étiquette, ce qui élimine le risque de contamination du puits. Cette disposition de l'étiquette dans le logement du corps du manchon aide à conserver l'intégrité de l'étiquette d'identification électroniquement sensible jusqu'à la fin de sa vie utile même dans des conditions défavorables de puits de pétrole forés.

Bien entendu, d'autres modes de réalisation sont envisageables sans sortir du cadre de l'invention. Ainsi, diverses modifications peuvent être apportées à l'homme du métier à l'invention qui vient d'être décrite à titre d'exemple.

## Revendications

1. Manchon pour connexion d'éléments tubulaires pour une installation de puits pétroliers, comprenant un corps tubulaire, avec deux extrémités du corps munies chacune d'une portion (14) de filetage interne pour l'accouplement à un élément tubulaire, le corps tubulaire comprenant encore une portion centrale (16, 26) séparant les deux extrémités munies chacune d'une portion de filetage (14) et comportant une épaisseur de paroi plus grande que l'épaisseur de la paroi des extrémités du corps, **caractérisé en ce qu'**il comprend :
- un segment d'extension (18, 22) qui s'étend à partir d'une des extrémités du corps tubulaire, après la portion de filetage interne (14), le segment d'extension possédant le même diamètre externe que celui du corps tubulaire et un diamètre interne égal ou plus grand à celui de la portion de filetage interne,
- le segment d'extension (18, 22) comprend un logement (12), muni d'une ouverture débouchant sur une surface externe du manchon, à l'intérieur duquel est logée une étiquette d'identification électroniquement sensible(1).

2. Manchon pour connexion d'éléments tubulaires selon la revendication 1, dans lequel le segment d'extension (18) forme une partie intégrante du corps tubulaire du manchon.

3. Manchon pour connexion d'éléments tubulaires selon la revendication 1, dans lequel le segment d'extension (22) est une pièce séparée, fixée à une extrémité du corps tubulaire.

4. Manchon pour connexion d'éléments tubulaires selon l'une quelconque des revendications de 1 à 3, dans lequel le logement (12) pour l'agencement de l'étiquette d'identification électroniquement sensible possède encore une ouverture débouchant sur une surface interne du segment d'extension (18, 22).

5. Manchon pour connexion d'éléments tubulaires selon l'une quelconque des revendications 1 à 3, dans lequel le logement (12) de l'étiquette s'étend selon une direction longitudinale du manchon et est situé au bord (30) du segment d'extension (18, 22).

6. Manchon pour connexion d'éléments tubulaires pour une installation de fond de puits, comprenant un corps tubulaire, avec deux extrémités du corps tubulaire munies chacune d'une portion (14) de filetage interne pour l'accouplement à un élément tubulaire, le corps tubulaire comprenant encore une portion centrale (16, 26) séparant les deux extrémités, d'épaisseur de paroi plus grande que celle des extrémités du corps, **caractérisée en ce que** la portion centrale (16, 26) du corps tubulaire comprend un logement (12) muni d'une ouverture sur une surface externe du corps tubulaire, à l'intérieur duquel est logée une étiquette d'identification électroniquement sensible (1).

7. Manchon pour connexion d'éléments tubulaires selon la revendication 6, dans lequel la portion centrale (16, 26) du corps tubulaire possède une longueur comprise entre 20 à 55mm.

8. Manchon pour connexion d'éléments tubulaires selon la revendication 6, dans lequel la portion centrale (16, 26) du corps tubulaire possède une longueur comprise entre 55 à 100 mm.

9. Manchon pour la connexion d'éléments tubulaires selon l'une des revendications de 1 à 8, comprenant une enveloppe (2) placée à l'intérieur du logement, pour l'agencement de l'étiquette.

10. Manchon pour la connexion d'éléments tubulaires selon la revendication 9, dans lequel l'enveloppe (2) est couplée au logement (12) par un ajustement serré

11. Manchon pour la connexion d'éléments tubulaires selon la revendication 9, dans lequel l'enveloppe (2) est couplée au logement (12) par filetage.
